# EUROPEAN PATENT SPECIFICATION

(11) **EP 2 460 986 B1**
(45) Date of publication and mention of the grant of the patent: **12.10.2016**
(21) Application number: 11191725.8
(22) Date of filing: 02.12.2011
(51) Int. Cl.: F01N 3/035, F01N 3/05, F01N 3/22, F01N 3/30, F01N 3/32, A47K 10/48

(54) **Particle reduction in a gasoline engine exhaust system**
Partikelreduktion in einer Auspuffanlage eines Benzinmotors
Réduction de particules dans un système d'échappement d'un moteur à essence

(30) Priority: 02.12.2010 GB 201020441
(43) Date of publication of application: 06.06.2012
(73) Proprietor: Jaguar Land Rover Limited, Whitley Coventry CV3 4LF (GB)
(72) Inventor: Richardson, David, Coventry, Warwickshire CV3 4LF (GB)
(74) Representative: Holmes, Matthew William

(56) References cited:
- WO-A1-2010/130909
- WO-A2-2005/077075
- DE-A1- 10 361 791
- DE-A1- 19 957 184
- DE-U1- 9 109 004

## Description

The present invention relates to the reduction of particles in the exhaust of a gasoline internal combustion engine, and in particular the oxidation of carbon and hydrocarbon particles.

Legislation requires exhaust emissions of vehicles to have low carbon monoxide CO, hydrocarbon HC and nitrous oxides NOx content. Emission controls have become ever more stringent, and engine manufacturers have developed appropriate solutions, in particular by providing for clean combustion of fuel and by fitting catalytic converters to the engine exhaust system.

Engine management systems have been developed to carefully control fuelling, but the reduction of particulate matter requires optimization of many parameters, and must in practice be balanced for fuel economy whilst minimizing emission of undesirable gases.

One solution for diesel engines is to reduce particle emissions by fitting a diesel particulate filter (DPF) to the exhaust tract. Such filters may eventually become blocked, and thus are periodically regenerated by combustion of the trapped particles.

A particle filter could also be fitted to the exhaust of a gasoline engine, but increasing back pressure as the filter becomes blocked may impact upon fuel efficiency of the engine in a manner which may be difficult to control.

Regeneration of a particle filter of a gasoline engine may also be difficult to achieve since little excess oxygen is available in the exhaust stream. As is well known, a conventional three-way catalytic converter has best operational efficiency when engine combustion conditions are stoichiometric, and it would be counter-productive, and perhaps damaging, to control gasoline engine combustion to meet the regeneration needs of a particle filter.

Accordingly there is a need for a means and method of substantially eliminating excess particulate matter from the exhaust gas stream of a gasoline engine.

For further information relating to a circuit for treating and discharging exhaust gases from a controlled ignition combustion engine, the reader is directed to international patent publication number WO-A1-2010-130909. Moreover, for further information regarding the control of emissions in exhaust systems for diesel engines, the reader is directed to international patent publication number WO-A2-2005-077075 and German utility model number G-9109004.

According to a first aspect of the invention, there is provided a method of oxidizing carbonaceous particles in the exhaust gas stream of a gasoline engine, the method comprising the steps of:
introducing air into the exhaust gas stream in a controlled manner; and
mixing said air with the exhaust gas stream in a closed reactor having a high surface area, so as to oxidize substantially all of the carbonaceous particles in the exhaust gas stream;
characterised by warming the air introduced into the gas stream by passing the air through a heat exchanger, said heat exchanger comprising an exhaust component wherein said exhaust component comprises a catalytic converter upstream of said particle reactor.

Rapid mixing is promoted by adopting a suitable mixing strategy, such as by introduction of air via multiple nozzles upstream of the reactor.

Introduction of air into the exhaust gas stream is controlled by any suitable method to ensure sufficient air is available to meet the oxidation requirement. The method may comprise pumping air via a variable speed pump or via a constant speed pump with adjustable throttle.

The required surface area of the reactor is a function of the exhaust gas content and factors such as reactor temperature and distribution of air within the exhaust gas stream. In order to promote oxidation the air and exhaust gas stream are preferably mixed over a reaction promoting surface of the reactor, such as a suitable oxidation catalyst.

Surface area of the reactor is preferably maximized so as to give the smallest possible enclosure, but gas pathways must remain of sufficient size so as not to impose an undesirable back pressure on the upstream exhaust tract. With current reaction monoliths, it is envisaged that the volume of the closed reactor is preferably in the range 95-115% of the swept volume associated with the exhaust tract - that is to say all cylinders of an in-line four cylinder engine, or one bank of a 'V' engine having two separate exhaust tracts.

The method may further include the step of pre-heating the air introduced into the gas stream, so as not to substantially reduce the temperature of the exhaust gas stream in the reactor.

In a further step, the method may include sensing the oxygen content of the exhaust gas stream exiting the reactor, so as to minimize the volume of air introduced to that just sufficient to oxidize the carbonaceous particle content.

According to a second aspect of the invention there is provided a particle reactor for the exhaust gas stream of a gasoline engine comprising an enclosure having an exhaust gas inlet and an outlet, said enclosure having a reaction surface, an air distribution manifold upstream of said reaction surface adapted to promote rapid mixing of air with the exhaust gas stream and a controller for admitting air via said manifold at a rate for oxidation of substantially all of the carbonaceous particles in said exhaust stream, characterised by a heat exchanger upstream of said manifold whereby incoming air is warmed by heat from said exhaust gas stream, said heat exchanger comprising an exhaust component wherein said exhaust component comprises a catalytic converter upstream of said particle reactor.

The reaction surface is preferably a honeycomb monolith, typically of ceramic material, and may further include a surface catalyst selected to promote said oxidation. The manifold and reaction surface are designed to promote mixing of the air and exhaust gas stream so as to ensure efficient oxidation of particles within the minimum volume of enclosure.

The size and surface area of reaction surface, the nature of the manifold, the number of air distribution orifices, and the physical measures to promote mixing of air and exhaust gas are within the skill of a suitably trained person, and may be determined by empirical experiment using conventional techniques. The effectiveness of oxidation can be determined by comparison of particle content upstream and downstream of the particle reactor, so as to achieve a desired reduction in particle content - for example elimination of over 90% of particles and preferably elimination of over 99% of particles.

The heat exchanger may comprise an air duct in or adjacent the wall of the exhaust pipe or a component thereof. The skilled man will size the heat exchanger according to the temperature of the exhaust pipe or component thereof, and the maximum rate of air flow.

Preferably the particle reactor includes a catalytic converter at the upstream side thereof. In use the catalytic converter is controlled to maximize chemical reduction of nitrogen oxide (NOx) emissions. For an engine operating at a stoichiometric air/fuel ratio, there may thus be little or no excess oxygen at the outlet of the catalytic converter. Furthermore within the catalytic converter, whilst a certain amount of the smaller carbon and hydrocarbon particulate matter may be oxidized, there is generally insufficient excess oxygen to ensure that such matter, particularly the larger particles, is not also emitted from the outlet.

The present invention allows further oxidation of carbon and hydrocarbon particulates by controlled introduction of additional air via the manifold, and in circumstances where such the production of particles cannot be sufficiently reduced by conventional engine management techniques.

A catalytic converter typically is a heat generator, and accordingly is very suitable as a heat input to a heat exchanger. Thus the heat exchanger may be incorporated in or immediately adjacent the catalytic converter. An air duct from the heat exchanger to the manifold may be insulated to avoid significant heat loss therefrom.

The controller for admitting air to the manifold is a device for varying the volume of air according to the oxidation requirements of the particle reactor. The controller may be a variable speed air pump, or a constant speed air pump with a throttle or adjustable bleed valve to control throughput. Other means of varying or controlling the volumetric flow rate of air will be apparent to the skilled person.

The controller is preferably coupled to an electronic control unit (ECU) which preferably forms part of the usual engine management system (EMS). The ECU accordingly controls the volume output of the controller, so as to provide sufficient air to the particle reactor, according to engine speed and load. A suitable flow control signal may be provided by sensing inlet manifold pressure. Air is preferably admitted via a filter so as to avoid adding atmospheric particles to the reactor, and to obviate wear of the controller or any flow control device associated herewith.

Within the scope of this application it is envisaged that various aspects, embodiments, examples, features and alternatives set out in the preceding paragraphs, in the claims and/or in the following description and drawings may be taken independently or in any combination thereof.

Other features of the invention will be apparent from the following description of several embodiments shown by way of example only in the accompanying drawings, in which:
Fig. 1 is a schematic representation of a first example of an exhaust gas treatment system according to an embodiment of the invention;
Fig. 2 is a schematic representation of a second example of an exhaust gas treatment system;
Fig. 3 is a schematic representation of a third example of an exhaust gas treatment system;
Fig. 4 is a schematic representation of an example of a distribution manifold for an exhaust gas treatment system according to an embodiment of the invention;
Fig. 5 is a schematic representation of an alternative distribution manifold to the example shown in Fig. 4; and
Fig. 6 is a schematic representation of a further example of a distribution manifold for an exhaust gas treatment system according to the invention.

In the accompanying drawings, the dimensions are illustrative and should not be taken as representative of any particular installation. Furthermore certain dimensions are exaggerated in order to better explain the invention.

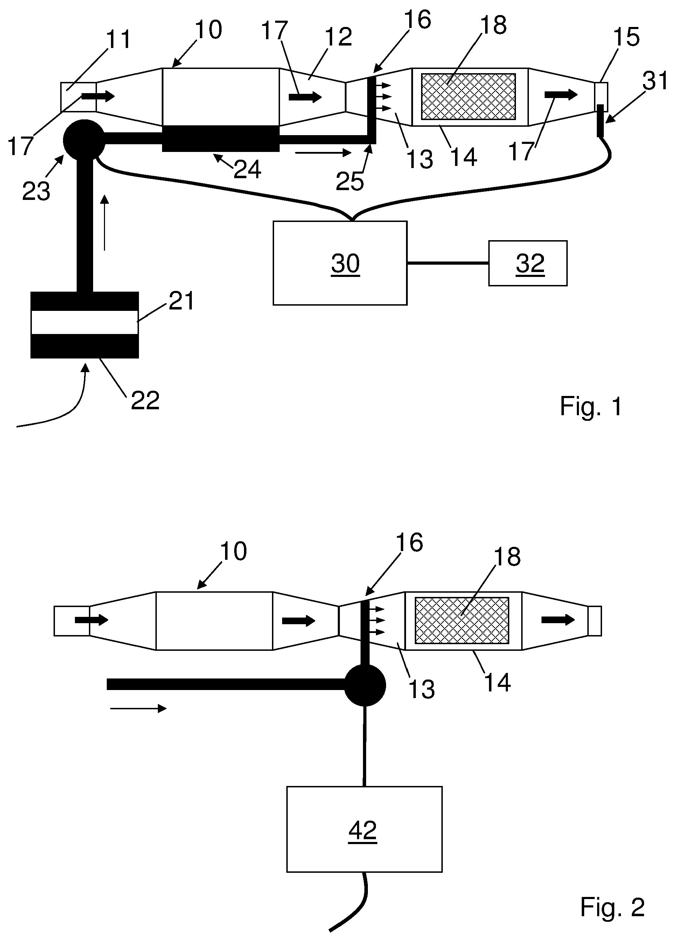

With reference to Fig. 1, a conventional three-way catalytic converter (10) of a motor vehicle has an inlet (11) for connection to the exhaust manifold of an internal combustion engine. The catalytic converter (10) is of conventional construction and comprises a tubular casing within which is contained a substrate for a catalyst.

The outlet (12) of the catalytic converter (10) is connected to the inlet (13) of a reaction vessel (14), which also comprises a tubular casing; an outlet (15) of the reaction vessel (14) connects to an exhaust tail pipe (not shown). Flow of exhaust gas is indicated by arrows (17).

External (fresh) air is supplied to a distribution manifold (16) within the inlet of the reaction vessel (14), from an air filter (21) having an air intake (22). The volume and pressure of incoming air is controlled by a flow control device (23), and may be pre-heated by a heat exchanger (24) of the catalytic converter (10). Waste heat which would otherwise be radiated is used for pre-heating of air, so that the temperature of exhaust gas is not significantly reduced. The air delivery pipe (25) may be insulated to preserve the temperature of air therein, and may be separate as illustrated, or incorporated into the external walls of the casing(s). The arrangement of manifold nozzles is selected to promote rapid mixing of air with the exhaust gases so as to ensure effective combustion of particles in the reaction vessel.

An electronic control unit (ECU) (30) communicates with the vehicle engine management system (EMS) (32) and with an oxygen sensor (31) at the outlet of the reaction vessel (14), to control the flow control device (23).

The air filter (21) may comprise the main engine air filter, or be a separate unit. Air pressure in the delivery pipe (25), and hence the volume flow rate can be controlled by the ECU (30), using a flow control device (23) comprising for example:
- a variable speed air pump with electronic control;
- an electrically driven air pump with electronically controlled variable flow control valve;
- a mechanically driven air pump with electronically or mechanically controlled flow control valve; or
- pressurized air from an engine boost system (e.g. turbocharger or supercharger) with electrically or mechanically controlled flow control valve.

The heat exchanger (24) may not be required, but it may be desirable to provide pre-heat so as not to cool the exhaust gas stream exiting from the catalytic converter (10).

The distribution manifold (16) is of any suitable kind with air outlets of appropriate size, shape and number suitable for promoting rapid mixing of air with the exhaust gas stream.

Within the reaction vessel (14), a matrix (18) optimizes mixing and distribution of exhaust gas and metered air from the manifold (16) so as to promote particulate oxidation. The matrix may include an appropriate oxidation catalyst to increase and/or optimize particulate oxidation.

The oxygen sensor (31) may be a broad range sensor to measure oxygen content of the treated exhaust gas, or may be a narrow band sensor giving an on/off signal to the ECU for admission of air via the manifold (16). The sensor (31) may be conventional and also used for other emissions control purposes.

Although illustrated as separate components in Fig. 1, the catalytic converter (10) and reaction vessel (14) may be incorporated into a common housing, or may be linked by a section of the exhaust pipe. Advantageously the catalytic converter and reaction vessel are close coupled, so as to minimize loss of exhaust gas temperature. No limitations of relative size, volume or position are implied by the illustration. If required, a non-return valve may be provided to prevent reverse flow of exhaust gases via the air delivery pipe. The flow control device may function to prevent such reverse flow.

Fig. 2 illustrates a variant in which like parts carry the same reference numerals. In Fig. 2 a heat exchanger is omitted, and fresh clean air is admitted via an air pump (41) with an integrated air flow control valve. A mechanical control unit (42) receives a control signal from the engine EMS.

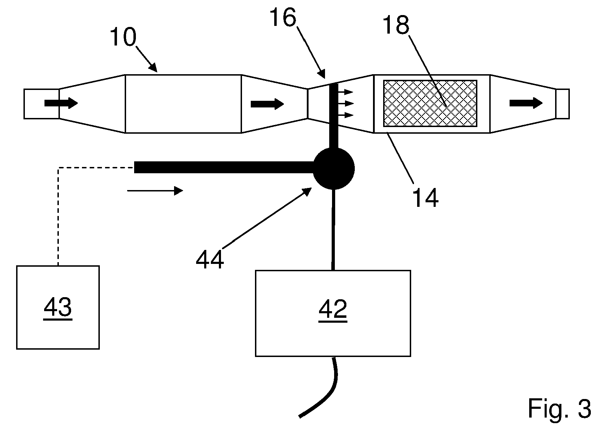

The arrangement of Fig. 3 is similar save that the local air pump is omitted, and air is supplied under pressure from an engine driven pump or from an engine boosting system (43) to a mechanical air control valve (44).

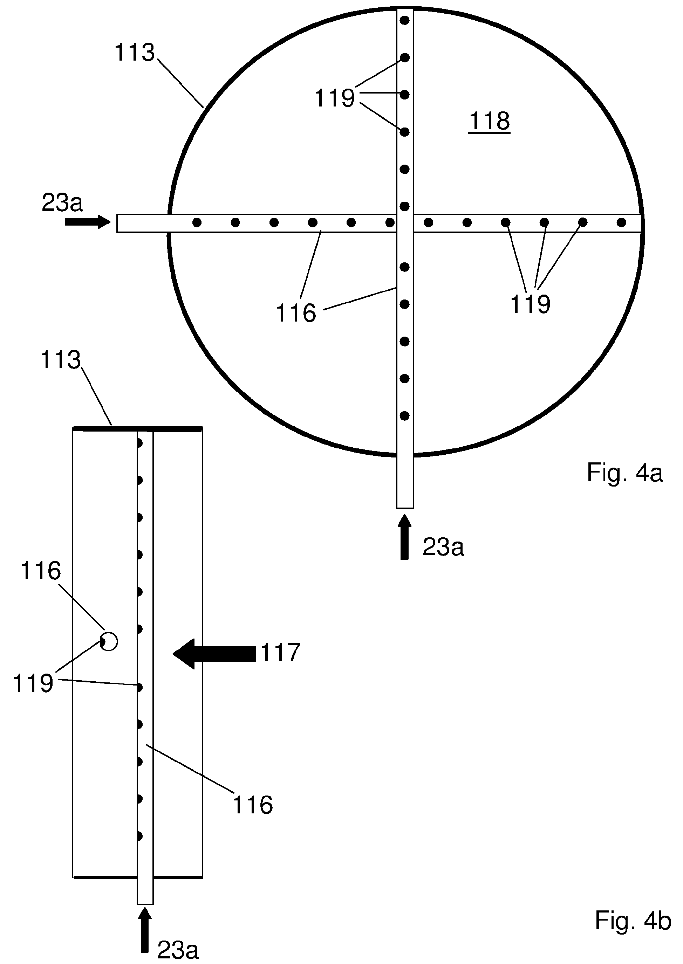

Fig. 4 shows a cross section through the inlet of the reaction vessel showing examples of the distribution manifold. Figure 4a illustrates a different embodiment from that of Figure 4b, as described below. In the examples shown in Fig. 4, the distribution manifold (116) comprises two perforated tubes (116) extending generally diametrically across the inlet (113) and arranged substantially orthogonally with respect to each other. The tubes are spaced apart by a small amount longitudinally within the inlet, i.e. in the direction of the flow of exhaust gas indicated by arrow (117).

The tubes (116) of the manifold include a plurality of apertures (119) through which external (fresh) air (23a) is supplied to the reaction vessel (not shown). The apertures (119) may be orientated to direct air towards the reactor matrix (118), as shown in Fig. 4b, or may alternatively be arranged to direct air into the oncoming flow of exhaust gas (117), as shown in Fig. 4a. Depending on the operating characteristics of the reactor, the orientation and number of the holes (119) may tuned as desired to ensure optimal mixing of the air and exhaust gas and thus distribution across the matrix (118).

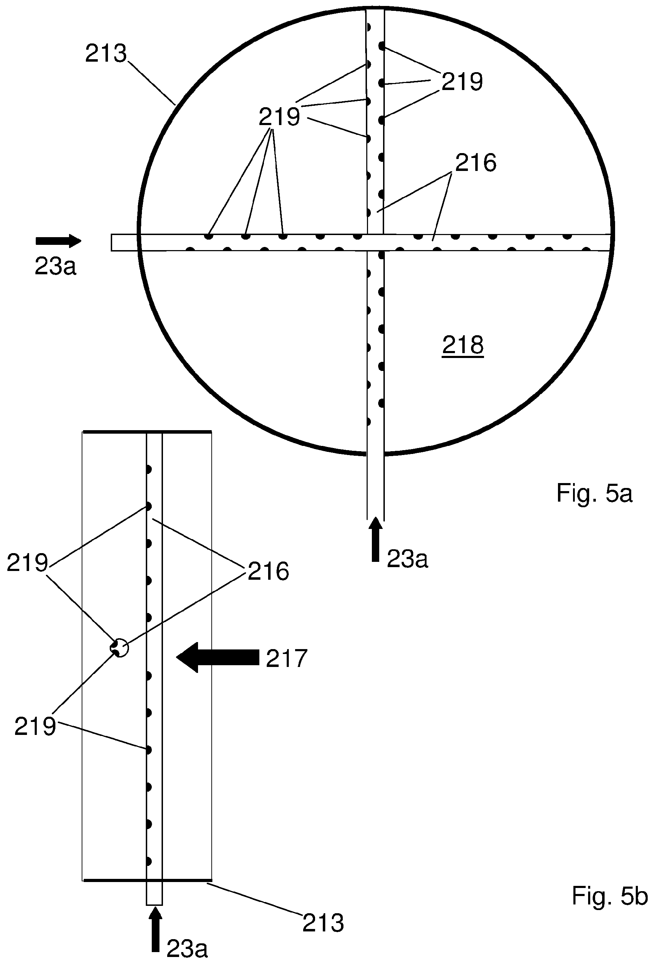

Fig. 5 shows alternative arrangements of the distribution manifolds shown in Fig. 4. Fig. 5a shows a variation on the manifold illustrated in Fig. 4a while Fig. 5b shows a variation of the manifold illustrated in Fig. 4b with the exhaust gas flowing from right to left.

In the example shown in Fig. 5, the supply of air (23a) is directed into the flow of exhaust gas (217) through holes (219) arranged along the sides of the tubes that form the distribution manifold (216). In the arrangement shown in Fig. 5b, the flow of exhaust gas (217) passes over the tubes of the manifold (216) on its way to the reactor matrix (218) and in so doing, the exhaust gas flow around the tubes encourages mixing of the air and the exhaust gas. In the example shown in Fig. 5a, the air is directed into the exhaust gas flow as it travels towards the reactor matrix (218). The air and exhaust gas must then flow over the tubes forming the manifold (216) before reaching the matrix (218) which serves to promote mixing of the air and exhaust gases and encourages even distribution of gasses across the reactor matrix (218).

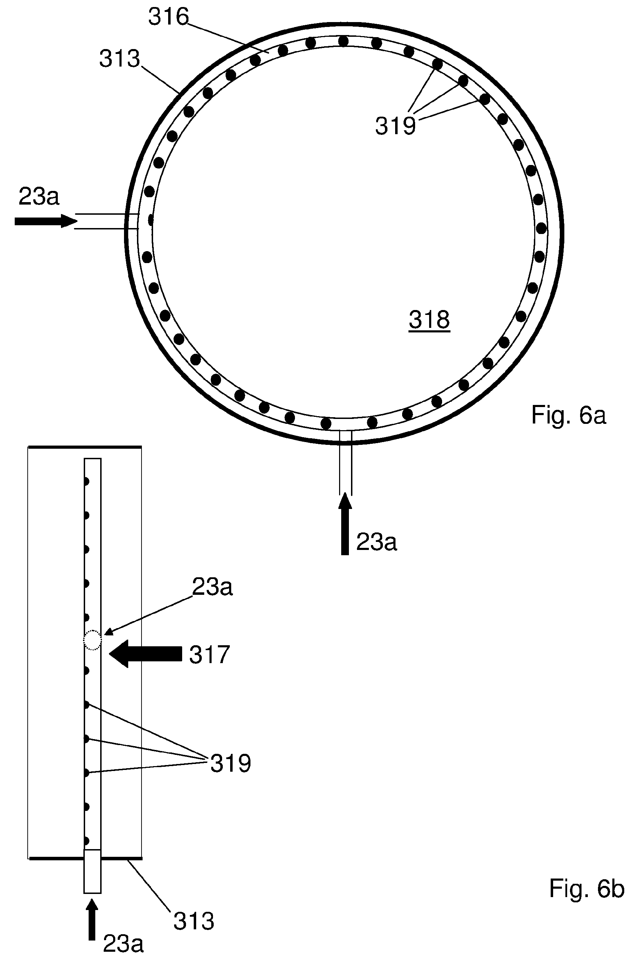

Fig. 6 shows a cross section through the inlet of the reaction vessel, showing in detail an alternative example of a distribution manifold (316). Fig. 6a shows a section through the inlet as viewed in the direction of exhaust gas flow, whereas Fig. 6b shows a side view of the section from Fig. 4a with the exhaust gas flowing from right to left.

In the example shown, the distribution manifold (316) is provided by a substantially annular tube arranged around the inside of the inlet (313) and configured to introduce external (fresh) air (23a) into the flow of exhaust gas is indicated by arrow (117) (Fig. 6b). The annular tube is configured so as to leave the central region of the inlet (313) free from obstruction. As with the examples shown in Fig. 4 and Fig. 5, the distribution manifold (316) is provided with a plurality of holes (319) which are arranged to introduce air (23a) into the exhaust gas flow (317) and are orientated so as to optimise distribution and mixing of the air into the exhaust gas flow (317) before it reached the reactor matrix (318).

## Claims

1. A particle reactor (14) for the exhaust gas stream of a gasoline engine comprising an enclosure having an exhaust gas inlet (13) and an outlet (15), said enclosure having a reaction surface (18), an air distribution manifold (16) upstream of said reaction surface adapted to promote rapid mixing of air with the exhaust gas stream and a controller (23) for admitting air via said manifold at a rate for oxidation of substantially all of the carbonaceous particles in said exhaust stream, **characterised by** a heat exchanger upstream (24) of said manifold (16) whereby incoming air is warmed by heat from said exhaust gas stream, said heat exchanger (24) comprising an exhaust component wherein said exhaust component comprises a catalytic converter (10) upstream of said particle reactor.

2. A reactor (14) according to claim 1, wherein said reaction surface (18) comprises a honeycomb monolith.

3. A reactor (14) according to claim 1 or claim 2, wherein said reaction surface (18) further includes an oxidation catalyst thereon.

4. A reactor (14) according to any preceding claim, wherein said controller (23) comprises a variable speed air pump.

5. A reactor (14) according to any preceding claim, wherein said controller (23) comprises an air flow throttling device.

6. A reactor (14) according to any preceding claim, wherein said heat exchanger (24) is incorporated in the wall of said exhaust component.

7. A reactor (14) according to any preceding claim, having said catalytic converter (10) close coupled thereto.

8. A reactor (14) according to any preceding claim, and having a volume in the range 95-115% of the swept engine volume associated therewith.

9. A method of oxidizing carbonaceous particles in an exhaust gas stream of a gasoline engine, the method comprising the steps of:
introducing air into the exhaust gas stream in a controlled manner, and mixing said air with the exhaust gas stream in a closed reactor having a reaction surface area so as to oxidize substantially all of the carbonaceous particles in the exhaust gas stream;
**characterised by** warming the air introduced into the gas stream by passing the air through a heat exchanger, said heat exchanger comprising an exhaust component wherein said exhaust component comprises a catalytic converter upstream of said particle reactor.

10. A method according to claim 9, and including the step of providing an oxidation catalyst in said reactor to promote oxidation of said particles.

11. A method according to claim 9 or claim 10, and further including the step of passing said exhaust gas stream through a three-way catalytic converter upstream of said reactor.

## Patentansprüche

1. Partikelreaktor (14) für den Abgasstrom eines Benzinmotors, umfassend eine Umhüllung mit einem Abgaseinlass (13) und einem Auslass (15), wobei die Umhüllung Folgendes aufweist: eine Reaktionsoberfläche (18), einen der Reaktionsoberfläche vorgelagerten Luftverteiler (16), der angepasst ist, ein schnelles Vermischen von Luft mit dem Abgasstrom zu fördern, und eine Steuereinrichtung (23) zum Einlassen von Luft über den Verteiler, in einem Maß zum Oxidieren von im Wesentlichen allen der kohlenstoffhaltigen Partikel in den Auspuffstrom, **gekennzeichnet durch** einen dem Verteiler (16) vorgelagerten (24) Wärmetauscher, wodurch einströmende Luft **durch** Wärme von dem Abgasstrom erwärmt wird, wobei der Wärmetauscher (24) eine Abgaskomponente umfasst, wobei die Abgaskomponente einen dem Partikelreaktor vorgelagerten Katalysator (10) umfasst.

2. Reaktor (14) nach Anspruch 1, wobei die Reaktionsoberfläche (18) einen Wabenmonolith umfasst.

3. Reaktor (14) nach Anspruch 1 oder 2, wobei die Reaktionsoberfläche (18) ferner einen Oxidationskatalysator darauf enthält.

4. Reaktor (14) nach einem der vorhergehenden Ansprüche, wobei die Steuereinrichtung (23) eine Luftpumpe mit variabler Geschwindigkeit umfasst.

5. Reaktor (14) nach einem der vorhergehenden Ansprüche, wobei die Steuereinrichtung (23) eine Luftstromdrosseleinrichtung umfasst.

6. Reaktor (14) nach einem der vorhergehenden Ansprüche, wobei der Wärmetauscher (24) in die Wand der Abgaskomponente eingebaut ist.

7. Reaktor (14) nach einem der vorhergehenden Ansprüche, wobei der Katalysator (10) eng damit gekoppelt ist.

8. Reaktor (14) nach einem der vorhergehenden Ansprüche und mit einem Volumen in dem Bereich von 95-115 % des damit verknüpften Motorhubraums.

9. Verfahren zum Oxidieren von kohlenstoffhaltigen Partikeln in einem Abgasstrom eines Benzinmotors, wobei das Verfahren die folgenden Schritte umfasst:
Einführen von Luft in den Abgasstrom auf eine geregelte Weise und Mischen der Luft mit dem Abgasstrom in einem geschlossenen Reaktor mit einem derartigen Reaktionsoberflächenbereich, dass im Wesentlichen alle der kohlenstoffhaltigen Partikel in dem Abgasstrom oxidiert werden;
**gekennzeichnet durch** Erwärmen der in den Gasstrom eingeführten Luft **durch** Leiten der Luft **durch** einen Wärmetauscher, wobei der Wärmetauscher eine Abgaskomponente umfasst, wobei die Abgaskomponente einen dem Partikelreaktor vorgelagerten Katalysator umfasst.

10. Verfahren nach Anspruch 9 und den Schritt des Bereitstellens eines Oxidationskatalysators in dem Reaktor enthaltend, um das Oxidieren der Partikel zu fördern.

11. Verfahren nach Anspruch 9 oder 10 und ferner den Schritt des Leitens des Abgasstroms durch einen dem Reaktor vorgelagerten Drei-Wege-Katalysator enthaltend.

## Revendications

1. Réacteur à particules (14) pour le flux de gaz d'échappement d'un moteur à essence comprenant une enceinte présentant une entrée de gaz d'échappement (13) et une sortie (15), ladite enceinte présentant une surface de réaction (18), un collecteur de distribution d'air (16) en amont de ladite surface de réaction conçu pour favoriser le mélange rapide de l'air avec le flux de gaz d'échappement et un dispositif de régulation (23) pour l'admission de l'air par l'intermédiaire dudit collecteur à une vitesse permettant l'oxydation de sensiblement toutes les particules carbonées dans ledit flux d'échappement, **caractérisé par** un échangeur de chaleur en amont (24) dudit collecteur (16), l'air entrant étant chauffé par la chaleur provenant dudit flux de gaz d'échappement, ledit échangeur de chaleur (24) comprenant un composant d'échappement, ledit composant d'échappement comprenant un convertisseur catalytique (10) en amont dudit réacteur à particules.

2. Réacteur (14) selon la revendication 1, dans lequel ladite surface de réaction (18) comprend un monolithe en nid d'abeille.

3. Réacteur (14) selon la revendication 1 ou la revendication 2, dans lequel ladite surface de réaction (18) inclut en outre un catalyseur d'oxydation sur celle-ci.

4. Réacteur (14) selon l'une quelconque des revendications précédentes, dans lequel ledit dispositif de régulation (23) comprend une pompe à air à vitesse variable.

5. Réacteur (14) selon l'une quelconque des revendications précédentes, dans lequel ledit dispositif de régulation (23) comprend un dispositif d'étranglement du flux d'air.

6. Réacteur (14) selon l'une quelconque des revendications précédentes, dans lequel ledit échangeur de chaleur (24) est incorporé dans la paroi dudit composant d'échappement.

7. Réacteur (14) selon l'une quelconque des revendications précédentes, ayant ledit convertisseur catalytique (10) étroitement couplé à celui-ci.

8. Réacteur (14) selon l'une quelconque des revendications précédentes et ayant un volume compris entre 95 et 115 % de la cylindrée unitaire du moteur associé à celui-ci.

9. Procédé d'oxydation de particules carbonées dans un flux de gaz d'échappement d'un moteur à essence, le procédé comprenant les étapes consistant à :
introduire de l'air dans le flux de gaz d'échappement de manière régulée, et mélanger ledit air avec le flux de gaz d'échappement dans un réacteur fermé présentant une superficie de réaction de sorte à oxyder sensiblement toutes les particules carbonées dans le flux de gaz d'échappement ;
**caractérisé par** le chauffage de l'air introduit dans le flux de gaz en faisant passer l'air à travers un échangeur de chaleur, ledit échangeur de chaleur comprenant un composant d'échappement, ledit composant d'échappement comprenant un convertisseur catalytique en amont dudit réacteur à particules.

10. Procédé selon la revendication 9, et incluant l'étape de fourniture d'un catalyseur d'oxydation dans ledit réacteur pour favoriser l'oxydation desdites particules.

11. Procédé selon la revendication 9 ou la revendication 10, et incluant en outre l'étape consistant à faire passer ledit flux de gaz d'échappement à travers un convertisseur catalytique à trois voies en amont dudit réacteur.
